Europäisches Patentamt

(19) **European Patent Office**

Office européen des brevets

(11) Numéro de publication : **0 001 143**
**B1**

(12) **FASCICULE DE BREVET EUROPÉEN**

(45) Date de publication du fascicule du brevet :
**17.06.81**

(51) Int. Cl.³ : **G 11 B 23/02, B 65 D 85/67**

(21) Numéro de dépôt : **78200165.5**

(22) Date de dépôt : **29.08.78**

(54) **Boîte de rangement pour casette à bande magnétique.**

(30) Priorité : **07.09.77 CH 10927/77**

(43) Date de publication de la demande :
**21.03.79 (Bulletin 79/06)**

(45) Mention de la délivrance du brevet :
**17.06.81 Bulletin 81/24**

(84) Etats contractants désignés :
**DE GB NL SE**

(56) Documents cités :
**FR - A - 2 195 026**
**FR - A - 2 274 106**
**FR - A - 2 274 107**
**FR - A - 2 274 108**
**FR - A - 2 274 110**
**FR - A - 2 274 111**
**US - A - 3 124 243**
**US - A - 3 232 421**

(73) Titulaire : **GEFITEC S.A.**
**Avenue de la Gare, 5 Case postale 452**
**CH-1001 Lausanne 1 (CH)**

(72) Inventeur : **Posso, Patrick Pierre Philippe**
**Avenue Jurigoz, 10**
**CH-1006 Lausanne (CH)**

(74) Mandataire : **Meylan, Robert Maurice**
**c/o BUGNION S.A. 10, route de Florissant Case 42**
**CH-1211 Geneve 2 (CH)**

Imprimerie Jouve, 17, rue du Louvre, 75001 Paris, France

## Boîte de rangement pour cassette à bande magnétique

La présente invention a pour objet une boîte de rangement pour cassette à bande magnétique, comportant un abattant en forme d'étui articulé à l'angle d'un second étui et présentant un dispositif destiné à s'engager dans au moins un logement d'au moins un noyau des bobines de la cassette pour l'immobiliser en rotation, venu d'une pièce avec l'abattant, et constitué par une saillie solidaire d'un bras élastique s'étendant parallèlement à la direction d'introduction de la cassette dans une ouverture de l'une des grandes parois de l'abattant, et susceptible de fléchir lors de l'introduction de la cassette dans l'abattant, ladite saillie étant orientée sensiblement perpendiculairement à une grande paroi de la boîte et constituée d'une nervure formant deux rampes obliques par rapport à la trajectoire de la cassette.

Une boîte de ce type est décrite par exemple dans le FR-A-2 274 106. Dans cette boîte antérieure les nervures des saillies des bras élastiques sont en forme de demi-cercles de telle sorte que l'on rencontre la même pente, et par conséquent la même résistance, lors de l'introduction de la cassette dans l'abattant et lors de l'extraction de la cassette de cet abattant. Or, la résistance à l'introduction doit être aussi faible que possible pour que l'usage de la boîte soit agréable et facile pour l'utilisateur. Une telle option se traduit toutefois par une faible résistance à l'extraction, de telle sorte que la cassette peut s'échapper accidentellement de l'abattant lors de manipulations de celui-ci, par exemple si l'utilisateur ouvre l'abattant en position renversée.

La présente invention vise à obvier à cet inconvénient.

A cet effet, la boîte de rangement selon l'invention est caractérisée en ce que ladite saillie présente une première rampe dirigée du côté de l'ouverture de la boîte et une seconde rampe dirigée du côté du fond, la pente de la seconde rampe étant sensiblement plus forte que la pente de la première rampe.

La pente de la première rampe relativement faible, facilite l'introduction de la cassette dans l'abattant, tandis que la pente de la seconde rampe, relativement forte, empêche la cassette de s'échapper inopinément de l'abattant lors de manipulations de celui-ci.

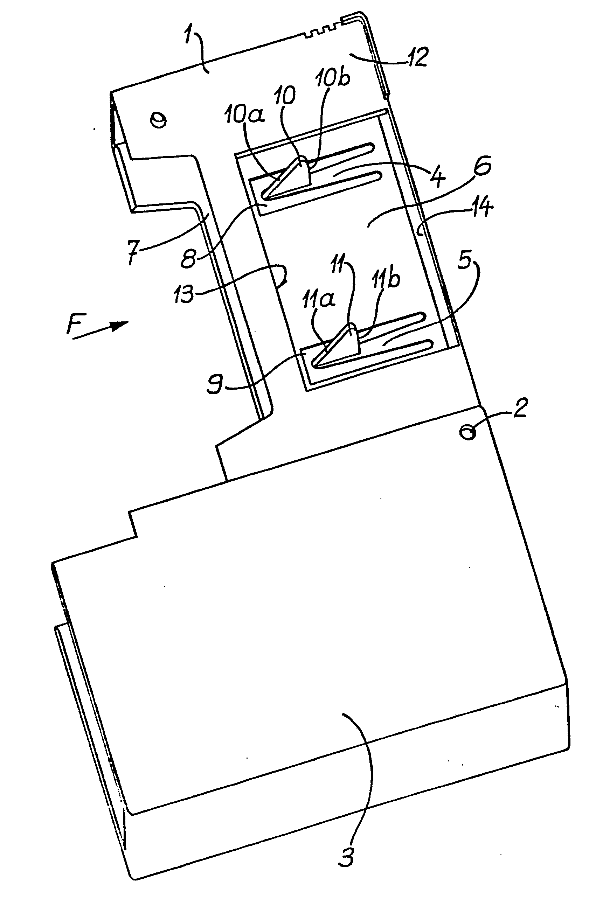

Le dessin annexé représente, à titre d'exemple, une forme d'exécution de l'invention.

L'unique figure du dessin en représente une vue en perspective.

La boîte comporte un abattant 1 en forme d'étui, destiné à recevoir une audio-cassette de type courant, non représentée. L'abattant 1 est articulé en un point 2 d'un deuxième étui 3. La boîte est réalisée par injection, en matière synthétique. Ce type de boîte étant bien connu en soi, la boîte représentée ne sera pas décrite ici plus en détails, à l'exception des dispositifs d'immobilisation des noyaux des bobines de la cassette destinée à être introduite dans l'étui constitué par l'abattant 1.

Ces dispositifs d'immobilisation sont constitués par deux bras élastiques 4 et 5 venus d'une pièce avec l'une des grandes parois 6 de l'abattant. Ces bras 4 et 5 s'étendent en direction de l'ouverture 7 de la boîte dans des découpes 8 et 9 de la paroi 6. Chacun de ces bras 4 et 5 présente à son extrémité une saillie 10, respectivement 11, en forme de lame dirigée perpendiculairement à la paroi 6 et venu d'une pièce, par moulage, avec les bras élastiques. Pour des raisons de fabrication la paroi 12 de l'abattant parallèle à la paroi 6 présente une découpe rectangulaire 13 en face des saillies 10 et 11. Chacune des saillies présente une première rampe 10a, respectivement 11a, inclinée à environ 45°, du côté de l'ouverture 7 de la boîte, et une seconde rampe 10b, respectivement 11b, présentant une forte pente, presque verticale, du côté du fond 14 de l'abattant.

Lors de l'introduction de la cassette dans l'abattant 1, selon la direction de la flèche F, la cassette rencontre les rampes 10a et 11a, ce qui provoque la flexion des bras 4 et 5 et l'écartement des saillies 10 et 11. Lorsque la cassette est en place les saillies 10 et 11 sont rappelées élastiquement et s'engagent dans les noyaux des bobines. Les rampes 10b et 11b s'engagent entre deux dents de ces noyaux et immobilisent ceux-ci en rotation. La cassette peut être extraite de la boîte par traction, la pente des rampes 10b et 11b étant suffisante pour que les saillies soient écartées par flexion élastique des bras 4 et 5.

On remarque que la cassette est parfaitement retenue dans l'abattant 1 par les saillies 10 et 11. La partie 3 de la boîte n'a donc plus de fonction de retenue mais elle sert uniquement à abriter la cassette.

Les bras élastiques 4, 5 peuvent bien entendu être orientés en sens inverse de celui représenté.

## Revendication

Boîte de rangement pour cassette à bande magnétique, comportant un abattant en forme d'étui (1) articulé à l'angle d'un second étui (3) et présentant un dispositif destiné à s'engager dans au moins un logement d'au moins un noyau des bobines de la cassette pour l'immobiliser en rotation, venu d'une pièce avec l'abattant, et constitué par une saillie (10) solidaire d'un bras élastique (4) s'étendant parallèlement à la direction d'introduction de la cassette dans une ouverture de l'une des grandes parois de l'abattant, et susceptible de fléchir lors de l'introduction de la cassette dans l'abattant, ladite saillie (10) étant orientée sensiblement perpendiculairement à une grande paroi de la boîte et constituée d'une nervure formant deux rampes obliques par rapport à la trajectoire de la cassette, caractérisée en ce que ladite saillie (10) présente une première rampe (10a) dirigée du côté de l'ouverture de la boîte et une seconde rampe (10b) dirigée du côté du fond, la pente de la seconde rampe étant sensiblement plus forte que la pente de la première rampe.

## Claim

Magnetic-tape storage package comprising a first cassette-receiving inner case (1) pivotally connected to one corner of a second, sheath-forming outer case (3) and provided with means engageable into at least one recess formed in the core of at least one cassette spool for holding said spool against rotation, said means being an integral part of said cassette-receiving inner case and consisting of a projection (10) solid with a resilient arm (4) parallel to the direction in which the cassette is to be introduced into an aperture formed in one of the major sides of said inner case, said arm (4) being adapted to yield when the cassette is introduced into said pivoted inner case (1), said projection (10) extending substantially at right angles to a major wall of said outer case and consisting of a fin comprising two ramps inclined in relation to the cassette path, wherein said projection (10) comprises a first inclined ramp (10a) directed towards said aperture and a second inclined ramp (10b) directed towards the inner case bottom, the slope of the second ramp being considerably steeper than that of said first ramp.

## Anspruch

Schachtel zum Ordnen vom Magnetbandkassetten aus einem futteralartigen Aufnahmeteil (1) und einem daran angelenkten zweiten Teil (3) und mit einer Einrichtung zum Eingriff in wenigstens eine Ausnehmung in wenigstens einer Nabe der Kassettenspulen zu deren drehfester Blockierung, wobei diese Einrichtung einstückig an dem Aufnahmeteil angearbeitet ist und eine Nase (10) an einem elastischen Arm (4) aufweist, der sich parallel zur Einschubrichtung der Kassette in einer Oeffnung in einer der grossen Seitenwände des Aufnahmeteiles erstreckt und beim Einschieben der Kassette in den Aufnahmeteil verbiegbar ist, und die Nase (10) rechtwinklig zu einer grosser Seitenwand der Schachtel ausgerichtet ist und aus einer Rippe mit zwei Schrägen in der Kassettenschiebebahn besteht, dadurch gekennzeichnet, dass diese Nase (10) eine erste, nach der Oeffnungsseite der Schachtel gerichtete Schräge (10a) und eine zweite, nach der Bodenseite gerichtete Schräge (10b) aufweist, wobei die Steigung der zweiten Schräge deutlich steiler ist als die Steigung der ersten Schräge.